# EUROPEAN PATENT APPLICATION

(11) **EP 4 238 418 A1**
(43) Date of publication of application: **06.09.2023**
(21) Application number: 23159679.2
(22) Date of filing: 02.03.2023
(51) Int. Cl.: A01N 25/30, A01N 59/20, A01P 3/00, A01N 37/20, A01N 37/28, A01N 37/40, A01N 37/44, A01N 47/38, A01N 47/40, A01N 47/46

(54) **FUNGICIDE COMPOSITION**

(30) Priority: 04.03.2022 EP 22305248
(71) Applicant: UPL Corporation Limited, Port Louis (MU); UPL Europe Ltd, Warrington, Cheshire WA3 6YN (GB)
(72) Inventor: PILLOT, Marc, Marseille (FR); FERRIER, Frederic, Marseille (FR); PIROTTE, Alan, Ougrée (BE)
(74) Representative: J A Kemp LLP

(57) **Abstract**

The present disclosure relates to a fungicidal composition. More particularly, the present disclosure relates to a granular fungicidal composition comprising a copper compound and a benzamide fungicide. The present disclosure also relates to a process for preparing the fungicidal composition and a method for controlling growth of fungal phytopathogens using the same.

## Description

### FIELD OF THE DISCLOSURE:

The present disclosure relates to a fungicidal composition. More particularly, the present disclosure relates to a fungicidal composition including a copper compound and a fungicide. The present disclosure also relates to a process for preparing the fungicidal composition and a method for controlling fungal phytopathogens using the same.

### BACKGROUND OF THE DISCLOSURE:

Agrochemicals are biologically active ingredients used for controlling pests and diseases and for promoting plant growth in agriculture. Agrochemical formulations comprise active ingredients and additional inactive/inert ingredients. These inactive/inert ingredients are chemicals, compounds, and other substances which do not possess any biological activity, but are included in the formulation to achieve a desired form such as granules, powder, suspension, emulsion, etc., or to impart desirable characteristics such as binding, disintegration, suspensibility, etc.

To control fungal pests/diseases and for promoting plant growth, it is required to provide the active ingredient in an amount, which is sufficient enough for the biological system. However, large quantities of the active ingredient may be inefficient and are also undesirable because of environmental and economic concerns. Furthermore, higher amounts of active ingredient may lead to increased risk of leaching to the ground water or the surface water. Similarly, lower amount of active ingredients may result in lack of control of the pests, and increased risk of resistance from the pests. Inert ingredients, therefore, play a major role for formulating the right amount of active ingredients to be made available to the biological system.

In solid formulations, such as granular formulations, the active ingredients are formulated along with inert ingredients such as binder, filler, disintegrating agents and other surfactants which are generally present in greater amount than the active ingredients itself. Due to this, the active ingredients may sometimes find it difficult to exit the granular formulation as it may be absorbed too deeply into the inert ingredients. Therefore, solid formulations capable of delivering the active ingredient to the target fungal pest is important.

In addition to this, zoxamide (3,5-dichloro-N-(3-chloro-1-ethyl-1-methyl-2-oxopropyl)-4-methyl benzamide) is a benzamide fungicide and has been proved highly effective for controlling oomycete pathogens and ascomycete fungi. Several studies have reported that zoxamide is effective in controlling *Botryis cinerea, Colletotrichum gloeosprioides, Phytophthora capsici* and *Phytophthora sojae.* Its mode of action by inhibition of β-tubulin assembly in mitosis is unique amongst compounds currently registered to control oomycete pathogens and ascomycete fungi. Zoxamide is a commonly used broad-spectrum fungicide. It has a low aqueous solubility, is volatile and has a low potential for leaching to groundwater. It is not usually persistent in soil or water systems. Therefore, use of zoxamide in controlling fungal diseases has found prominence in treatment practices. Prior art literature is also crowded with liquid formulations comprising zoxamide.

Further, various compositions of copper and benzamide fungicides are known in the prior art; however, there is still a need to develop solid formulations which can effectively deliver fungicides to plants/crops and improve its biological response in controlling phytopathogenic fungal populations. Therefore, it would be advantageous to develop a solid fungicidal composition comprising a copper compound and a benzamide fungicide, wherein the fungicide is embedded within the inert ingredients in such a manner, that the inert ingredient holds the fungicide uniformly within the granular system and once dissociated, the fungicide would readily be available within the system, thereby providing efficient coverage to inhibit fungal growth and to overcome the difficulties witnessed in agricultural practices.

### OBJECTIVES OF THE DISCLOSURE:

It is a primary objective of the present disclosure to provide a granular composition comprising a copper compound and a fungicide.

It is another objective of the present disclosure to provide a stable granular composition having efficient retention of the active ingredients and good suspensibility.

It is yet another objective of the present disclosure to provide a stable granular composition having efficient phytopathogenic antifungal activity.

### SUMMARY OF THE DISCLOSURE:

In one aspect, the present disclosure provides a fungicidal composition comprising a copper compound and a benzamide fungicide.

In another aspect, the present disclosure provides a fungicidal composition comprising:
(a) a fungicide component comprising a copper compound and a benzamide fungicide; and
(b) a surfactant blend;
wherein a weight ratio of the fungicide component to the surfactant blend is from about 10:1 to about 1:1.

In yet another aspect, the present disclosure provides a granular fungicidal composition comprising:
(a) a fungicide component comprising an inorganic copper compound and a benzamide fungicide; and
(b) an anionic surfactant blend;
wherein a weight ratio of the fungicide component to the anionic surfactant blend is from about 10:1 to about 1:1.

In yet another aspect, the present disclosure provides a granular fungicidal composition comprising:
(a) a fungicide component comprising tribasic copper sulphate (TBCS) and a benzamide fungicide; and
(b) an anionic surfactant blend;
wherein a weight ratio of the fungicide component to the anionic surfactant blend is from about 10:1 to about 1:1.

In yet another aspect, the present disclosure provides a granular fungicidal composition comprising:
(a) a fungicide component comprising tribasic copper sulphate (TBCS) and zoxamide; and
(b) an anionic surfactant blend;
wherein a weight ratio of the fungicide component to the anionic surfactant blend is from about 10:1 to about 1:1.

In yet another aspect, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 10:1 to about 1:1.

In another aspect, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 8:1 to about 2:1.

In yet another aspect, the present disclosure also provides use of the water dispersible granule (WDG) composition according to the present disclosure as a fungicide for controlling the growth of fungal phytopathogens.

In another aspect, the present disclosure provides a method for controlling growth of fungal phytopathogens, said method comprising applying to said plant or a locus or a plant propagation material thereof, a fungicidal composition comprising: a fungicide component comprising a copper compound and a benzamide fungicide; and a surfactant blend.

In yet another aspect, the present disclosure provides a kit comprising at least one of the ingredients of the stable water dispersible granule (WDG) composition of the present disclosure.

Additional features and advantages of the present disclosure will be apparent from the detailed description that follows, which illustrates by way of example, the most preferred features of the present disclosure which are not to be construed as limiting the scope of the disclosure described herein.

### DETAILED DESCRIPTION OF THE DISCLOSURE:

The present disclosure now will be described hereinafter with reference to the accompanying examples, in which embodiments of the disclosure are shown. This description is not intended to be a detailed catalogue of all the different ways in which the disclosure may be implemented, or all the features that may be added to the instant disclosure. For example, features illustrated with respect to one embodiment may be incorporated into other embodiments, and features illustrated with respect to a particular embodiment may be deleted from that embodiment. Thus, the disclosure contemplates that in some embodiments of the disclosure, any feature or combination of features set forth herein can be excluded or omitted. In addition, numerous variations and additions to the various embodiments suggested herein will be apparent to those skilled in the art in light of the instant disclosure, which do not depart from the instant disclosure. Hence, the following descriptions are intended to illustrate some particular embodiments of the disclosure, and not to exhaustively specify all permutations, combinations and variations thereof.

Unless otherwise defined, all technical and scientific terms used herein have the same meaning as commonly understood by one of ordinary skill in the art to which this disclosure belongs. Although methods and materials similar or equivalent to those described herein can be used in the practice or testing of the disclosure, suitable methods and materials are described herein.

It must be noted that, as used in this specification, the singular forms "a", "an" and "the" include plural referents unless the content clearly dictates otherwise. The terms "preferred" and "preferably" refer to embodiments of the disclosure that may afford certain benefits, under certain circumstances.

As used herein, the terms "comprising", "including", "having", "containing", "involving", and the like are to be understood to be open-ended i.e., to mean including but not limited to.

As used herein, the terms "about" or "approximately" are inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ±10% or ±5% of the stated value.

Recitation of ranges of values are merely intended to serve as a shorthand method of referring individually to each separate value falling within the range, unless otherwise indicated herein, and each separate value is incorporated into the specification as if it were individually recited herein. The endpoints of all ranges are included within the range and independently combinable. As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. All methods described herein can be performed in a suitable order unless otherwise indicated herein or otherwise clearly contradicted by context.

The use of any and all examples, or exemplary language (e.g., "such as"), is intended merely to better illustrate the disclosure and does not pose a limitation on the scope of the disclosure unless otherwise claimed. No language in the specification should be construed as indicating any non-claimed element as essential to the practice of the disclosure as used herein.

While the disclosure has been described with reference to an exemplary embodiment, it will be understood by those skilled in the art that various changes may be made, and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure is not limited to the particular embodiment disclosed as the best mode contemplated for carrying out this disclosure, but that the disclosure will include all embodiments falling within the scope of the appended claims.

The expression of various quantities in terms of "%" or "% w/v" or "% w/w" means the percentage by weight of the total solution or composition unless otherwise specified.

As used herein, the term "agrochemical" is understood to denote an agricultural chemical such as pesticides, fungicides, insecticides, acaricides, herbicides, nematicides, plant growth regulators and can be used interchangeably.

The salts referred to herein are agrochemically acceptable salts. As used herein, an "agrochemically acceptable salt" means a salt which is acceptable for use in agrochemical or horticultural use.

As used herein, the term "agriculturally acceptable amount of active" refers to an amount of an active that kills or inhibits the plant disease for which control is desired, in an amount not significantly toxic to the plant being treated.

As used herein, the term "fungicide" refers to the ability of a substance to decrease or inhibit growth of fungi or oomycetes.

As used herein, the term "fungicidally effective amount" is an amount of active ingredient such as a fungicide which causes an adversely modifying effect and includes deviations from natural development, killing, regulation, desiccation, retardation, and the like.

As used herein, the term "pre-emergence" refers to the time point before seedlings emerge from the ground. When any fungicide is applied at pre-emergence stage, it prevents establishment of the fungi.

As used herein, the term "post-emergence" refers to the time point after seedlings emerge from the ground. When any fungicide is applied at post-emergence stage, it prevents growth of the fungi.

As used herein the term "plant" or "crop" refers to whole plants, plant organs (e.g., leaves, stems, twigs, roots, trunks, limbs, shoots, fruits etc.), plant cells, or plant seeds. This term also encompasses plant crops such as fruits. The term "plant" may further include the propagation material thereof, which may include all the generative parts of the plant such as seeds and vegetative plant material such as cuttings and tubers, which can be used for the multiplication of the plant. This includes seeds, tubers, spores, corms, bulbs, rhizomes, sprouts basal shoots, stolons, and buds and other parts of plants, including seedlings and young plants, which are to be transplanted after germination or after emergence from soil.

The term "locus" as used herein shall denote the vicinity of a desired crop in which control of the spread of phytopathogenic fungi or fungi like pathogen is desired. The locus includes the vicinity of desired crop plants wherein the phytopathogenic fungi or fungi like pathogen infection has either emerged or is most likely to emerge or is yet to emerge.

The term "plant propagation material" refers to the parts of the plant, such as seeds, which can be used for the propagation of the plant and vegetative plant material. There may be mentioned, e.g., the seeds (in the strict sense), roots, fruits, tubers, bulbs, rhizomes, parts of plants. Germinated plants or young plants, which may be transplanted after germination or after emergence from the soil.

The term "seed" embraces seeds and plant propagules of all kinds including but not limited to true seeds, seed pieces, suckers, corms, bulbs, fruit, tubers, grains, cuttings, cut shoots and the like and means in a preferred embodiment true seed. To term "control" or "controlling" fungus means to inhibit, and/or supress the ability of fungus to grow and/or reproduce, or to limit fungus-related damage or loss in crop plants or denotes control and prevention of a disease. Controlling effects include all deviation from natural development, for example: killing, retardation, decrease of the fugal disease.

As described herein, the term "increased yield" of an agricultural plant means that the yield of a product of the respective plant is increased by a measurable amount over the yield of the same product of the plant produced under the same conditions, but without the application of the compositions described herein.

As used herein, the term "g a.i./L" as used herein denotes the concentration of the respective active ingredient in "grams" present "per litre" of the composition.

As used herein, the term "g a.i./h" as used herein denotes the concentration of the respective active ingredient in "grams" applied "per hectare" of the crop field.

As used herein, the term "tank mix" refers to a formulation of more than one component in a tank mix formulation and intended to be applied onto plants with/without further dilution with water to make a mixture.

As used herein, the term "pre-mix" refers to a formulation of more than one component in a ready-mix formulation and intended to be applied onto plants with/without further dilution with water to make a mixture.

Each of the aspects described above may have one or more embodiments. Each of the embodiments described hereinafter may apply to one or all of the aspects described hereinabove. These embodiments are intended to be read as being preferred features of one or all of the aspects described hereinabove. Each of the embodiments described hereinafter applies to each of the aspects described hereinabove individually.

In an embodiment, the present disclosure provides an agrochemical composition.

Accordingly in an embodiment, the present disclosure provides a fungicidal composition.

Accordingly in an embodiment, the present disclosure provides a fungicidal composition comprising a copper compound and a fungicide.

Accordingly in an embodiment, the present disclosure provides a fungicidal composition comprising an inorganic copper compound and a fungicide.

Accordingly in an embodiment, the present disclosure provides a fungicidal composition comprising a copper compound and a benzamide fungicide.

Accordingly in an embodiment, the present disclosure provides a fungicidal composition comprising an inorganic copper compound and a benzamide fungicide.

Accordingly in an embodiment, the present disclosure provides a fungicidal composition comprising:
(a) a fungicide component; and
(b) a surfactant blend.

Accordingly in an embodiment, the present disclosure provides a fungicidal composition comprising:
(a) a fungicide component; and
(b) a surfactant blend;
wherein a weight ratio of the fungicide component to the surfactant blend is from about 20:1 to about 1:1.

In a preferred embodiment, the weight ratio of the fungicide component to the surfactant blend is selected from ratios comprising 20:1, 19:1, 18:1, 17:1, 16:1, 15:1, 14:1, 13:1, 12:1, 11:1, 10:1, 9:1, 8:1, 7:1, 6:1, 5:1, 4:1, 3:1, 2:1 and 1:1.

In a preferred embodiment, the present disclosure provides a fungicidal composition comprising:
(a) a fungicide component; and
(b) an anionic surfactant blend;
wherein a weight ratio of the fungicide component to the anionic surfactant blend is from about 20:1 to about 1:1.

In a preferred embodiment, the present disclosure provides a granular fungicidal composition comprising:
(a) a fungicide component; and
(b) an anionic surfactant blend;
wherein a weight ratio of the fungicide component to the anionic surfactant blend is from about 20:1 to about 1:1.

In a preferred embodiment, the present disclosure provides a fungicidal composition comprising:
(a) a fungicide component comprising a copper compound and a benzamide fungicide; and
(b) an anionic surfactant blend;
wherein a weight ratio of the fungicide component to the anionic surfactant blend is from about 20:1 to about 1:1.

In a preferred embodiment, the present disclosure provides a granular fungicidal composition comprising:
(a) a fungicide component comprising a copper compound and a benzamide fungicide; and
(b) an anionic surfactant blend;
wherein a weight ratio of the fungicide component to the anionic surfactant blend is from about 20:1 to about 1:1.

Accordingly in an embodiment, the present disclosure provides a fungicidal composition which is in a form of a water-dispersible granule (WDG) formulation.

In a preferred embodiment, the present disclosure provides a fungicidal composition comprising:
(a) a fungicide component comprising a copper compound and a benzamide fungicide; and
(b) an anionic surfactant blend;
wherein a weight ratio of the fungicide component to the anionic surfactant blend is from about 10:1 to about 1:1.

In an embodiment, the present disclosure provides a fungicidal composition comprising:
(a) a fungicide component comprising a copper compound and a benzamide fungicide; and
(b) an anionic surfactant blend comprising one or more sulfonic acid surfactants;
wherein a weight ratio of the fungicide component to the anionic surfactant blend is from about 10:1 to about 1:1.

In an embodiment, the present disclosure provides a granular fungicidal composition comprising:
(a) a fungicide component comprising a copper compound and a benzamide fungicide; and
(b) an anionic surfactant blend comprising one or more sulfonic acid surfactants;
wherein a weight ratio of the fungicide component to the anionic surfactant blend is from about 10:1 to about 1:1.

In an embodiment, the copper compound is an inorganic copper compound.

In an embodiment, the present disclosure provides a granular fungicidal composition comprising:
(a) a fungicide component comprising an inorganic copper compound and a benzamide fungicide; and
(b) an anionic surfactant blend comprising one or more sulfonic acid surfactants;
wherein a weight ratio of the fungicide component to the anionic surfactant blend is from about 10:1 to about 1:1.

In a preferred embodiment, the copper compound is a copper salt.

In an embodiment, the copper compound is a copper salt selected from the group comprising copper sulphate, tribasic copper sulphate, copper chloride, copper oxide, cupric oxide, copper nitrate, copper perchlorate, copper bromide, copper hydroxide, copper iodide, cupric acetate, copper sulfate pentahydrate, and salts, isomers or derivatives thereof.

In a preferred embodiment, the copper compound is tribasic copper sulphate (TBCS).

In an embodiment, the copper compound is copper sulphate.

In an embodiment, the benzamide fungicide is selected from the group comprising benzohydroxamic acid, flumetover, fluopicolide, fluopimomide, tioxymid, trichlamide, zarilamid, zoxamide, or their isomers thereof.

In a preferred embodiment, the benzamide fungicide is zoxamide.

In an embodiment, the present disclosure provides a fungicidal composition comprising:
(a) a fungicide component comprising tribasic copper sulphate (TBCS) and a benzamide fungicide; and
(b) an anionic surfactant blend comprising one or more sulfonic acid surfactants;
wherein a weight ratio of the fungicide component to the anionic surfactant blend is from about 10:1 to about 1:1.

In one embodiment, the present disclosure provides a fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 20:1 to about 1:1.

In one embodiment, the present disclosure provides a fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 10:1 to about 1:1.

In an embodiment, the present disclosure provides a fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 8:1 to about 2:1.

In an embodiment, the present disclosure provides a fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is about 5:1.

In an embodiment, the present disclosure provides a granular fungicidal composition comprising:
(a) a fungicide component comprising tribasic copper sulphate (TBCS) and a benzamide fungicide; and
(b) an anionic surfactant blend comprising one or more sulfonic acid surfactants;
wherein a weight ratio of the fungicide component to the anionic surfactant blend is from about 10:1 to about 1:1.

In one embodiment, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 20:1 to about 1:1.

In one embodiment, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 10:1 to about 1:1.

In an embodiment, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is from about 8:1 to about 2:1.

In one preferred embodiment, the present disclosure provides a granular fungicidal composition comprising:
(a) a fungicide component comprising tribasic copper sulphate (TBCS) and zoxamide; and
(b) an anionic surfactant blend comprising one or more sulfonic acid surfactants;
wherein a weight ratio of the fungicide component to the anionic surfactant blend is about 5:1.

According to an embodiment of the present disclosure, the fungicidal composition comprises from about 10% w/w to about 70% w/w of the fungicide component of total weight of the fungicidal composition.

In a preferred embodiment of the present disclosure, the fungicidal composition comprises from about 20% w/w to about 60% w/w of the fungicide component of total weight of the fungicidal composition.

In a preferred embodiment of the present disclosure, the fungicidal composition comprises from about 30% w/w to about 55% w/w of the fungicide component of total weight of the fungicidal composition.

In a preferred embodiment of the present disclosure, the fungicidal composition comprises of about 54.2% w/w of the fungicide component of total weight of the fungicidal composition.

According to an embodiment of the present disclosure, the fungicidal composition comprises about 20% w/w to about 60% w/w of the copper compound of total weight of the fungicidal composition.

In a preferred embodiment of the present disclosure, the fungicidal composition comprises about 50% w/w of the copper compound of total weight of the fungicidal composition.

In a preferred embodiment of the present disclosure, the fungicidal composition comprises about 46.5% w/w of tribasic copper sulphate (TBCS) of total weight of the fungicidal composition.

In a preferred embodiment of the present disclosure, the fungicidal composition comprises about 45% w/w of tribasic copper sulphate (TBCS) of total weight of the fungicidal composition.

According to an embodiment of the present disclosure, the fungicidal composition comprises from about 1% w/w to about 20% w/w of the benzamide fungicide of total weight of the fungicidal composition.

In a preferred embodiment of the present disclosure, the fungicidal composition comprises from about 5% w/w to about 10% w/w of the benzamide fungicide of total weight of the fungicidal composition.

In a preferred embodiment of the present disclosure, the fungicidal composition comprises from about 5% w/w to about 10% w/w of zoxamide of total weight of the fungicidal composition.

In a preferred embodiment of the present disclosure, the fungicidal composition comprises about 7.7% w/w of zoxamide of total weight of the fungicidal composition.

According to an embodiment of the present disclosure, the fungicidal composition comprises a copper compound and a benzamide fungicide in a weight ratio from about 10:1 to about 1:1.

In a preferred embodiment of the present disclosure, the fungicidal composition comprises a copper compound and a benzamide fungicide in a weight ratio from about 8:1 to about 2:1.

In a preferred embodiment of the present disclosure, the fungicidal composition comprises a copper compound and a benzamide fungicide in a weight ratio from about 7:1 to about 3:1.

In a preferred embodiment of the present disclosure, the fungicidal composition comprises a copper compound and a benzamide fungicide in a weight ratio of about 6:1.

In another preferred embodiment of the present disclosure, the fungicidal composition comprises tribasic copper sulphate (TBCS) and zoxamide in a weight ratio of about 6:1.

In a preferred embodiment of the present disclosure, the fungicidal composition comprises a copper compound and a benzamide fungicide in a weight ratio of about 5:1.

In another preferred embodiment of the present disclosure, the fungicidal composition comprises tribasic copper sulphate (TBCS) and zoxamide in a weight ratio of about 5:1.

According to an embodiment of the present disclosure, the surfactant blend comprises anionic surfactant blend.

According to an embodiment, the anionic surfactant blend comprises sulfonic acid surfactants.

In an embodiment, the anionic surfactant blend comprises at least two salts of sulfonic acid surfactants.

In an embodiment, sulfonic acid surfactants are selected from the group comprising substituted and polymeric alkyl and aryl sulfonates such as sodium alkylnaphthalene sulfonate, polynaphthalene sulfonate, sodium polynaphthalene sulfonate, sodium isopropyl naphthalene sulfonate, calcium lignosulfonate, sodium lignosulfonate, ammonium lignosulfonate, or combinations thereof.

According to an embodiment, the fungicidal composition comprises from about 1% w/w to about 40% w/w of the anionic surfactant blend of total weight of the fungicidal composition.

In a preferred embodiment, the fungicidal composition comprises from about 5% w/w to about 30% w/w of the anionic surfactant blend of total weight of the fungicidal composition.

In a preferred embodiment, the fungicidal composition comprises from about 5% w/w to about 20% w/w of the anionic surfactant blend of total weight of the fungicidal composition.

In a preferred embodiment, the fungicidal composition of about 10.5% w/w of the anionic surfactant blend of total weight of the fungicidal composition.

In an embodiment, the anionic surfactant blend comprises polynaphthalene sulfonate and sodium lignosulfonate.

In a preferred embodiment, the fungicidal composition of about 5% w/w of polynaphthalene sulfonate of total weight of the fungicidal composition.

In a preferred embodiment, the fungicidal composition of about 5% w/w of sodium lignosulfonate of total weight of the fungicidal composition.

In another embodiment, the anionic surfactant blend comprises polynaphthalene sulfonate and sodium lignosulfonate in a weight ratio from about 0.1: 1 to about 1:0.1.

In a preferred embodiment, the weight ratio of polynaphthalene sulfonate to sodium lignosulfonate is selected from ratios comprising 0.1:1, 0.2:1, 0.3:1, 0.4:1, 0.5:1, 0.6:1, 0.7:1, 0.8:1, 0.9:1 and 1:1.

In a preferred embodiment, the weight ratio of polynaphthalene sulfonate to sodium lignosulfonate is selected from ratios comprising 1:0.1, 1:0.2, 1:0.3, 1:0.4, 1:0.5, 1:0.6, 1:0.7, 1:0.8, 1:0.9 and 1:1.

In another embodiment, the anionic surfactant blend comprises polynaphthalene sulfonate and sodium lignosulfonate in a weight ratio of about 1:1.

In another preferred embodiment, the anionic surfactant blend comprises sodium polynaphthalene sulfonate, sodium lignosulfonate, sodium isopropyl naphthalene sulfonate, or combinations thereof.

In a preferred embodiment, the fungicidal composition of about 0.5% w/w of sodium isopropyl naphthalene sulfonate of total weight of the fungicidal composition.

According to embodiment, the anionic surfactant blend comprises sodium polynaphthalene sulfonate, sodium lignosulfonate, sodium isopropyl naphthalene sulfonate in a weight ratio of from about 1:1:1 to about 1: 1:0.1.

In a preferred embodiment, the weight ratio of sodium polynaphthalene sulfonate to sodium lignosulfonate to sodium isopropyl naphthalene sulfonate is selected from ratios comprising 1:1:1, 1:1:0.9, 1:1:0.8, 1:1:0.7, 1:1:0.6, 1:1:0.5, 1:1:0.4, 1: 1:0.3, 1: 1:0.2 and 1:1:0.1.

In yet another preferred embodiment, the anionic surfactant blend comprises sodium polynaphthalene sulfonate, sodium lignosulfonate, sodium isopropyl naphthalene sulfonate in a weight ratio of about 1:1:0.1.

In an embodiment, the present disclosure provides a granular fungicidal composition comprising:
(a) a fungicide component comprising tribasic copper sulphate (TBCS) and zoxamide; and
(b) an anionic surfactant blend comprising polynaphthalene sulfonate and sodium lignosulfonate;
wherein a weight ratio of the fungicide component to the anionic surfactant blend is from about 10:1 to about 1:1.

In an embodiment, the present disclosure provides a granular fungicidal composition comprising:
(a) a fungicide component comprising tribasic copper sulphate (TBCS) and zoxamide; and
(b) an anionic surfactant blend comprising sodium polynaphthalene sulfonate, sodium lignosulfonate, sodium isopropyl naphthalene sulfonate;
wherein a weight ratio of the fungicide component to the anionic surfactant blend is from about 10:1 to about 1:1.

According to an embodiment, the present disclosure provides a granular fungicidal composition comprising:
(a) a fungicide component comprising tribasic copper sulphate (TBCS) and zoxamide;
(b) an anionic surfactant blend comprising polynaphthalene sulfonate and sodium lignosulfonate; and
(c) at least one agrochemically acceptable excipient;
wherein a weight ratio of the fungicide component to the anionic surfactant blend is from about 10:1 to about 1:1.

According to an embodiment, the present disclosure provides a granular fungicidal composition comprising:
(a) a fungicide component comprising tribasic copper sulphate (TBCS) and zoxamide;
(b) an anionic surfactant blend comprising sodium polynaphthalene sulfonate, sodium lignosulfonate, sodium isopropyl naphthalene sulfonate; and
(c) at least one agrochemically acceptable excipient;
wherein a weight ratio of the fungicide component to the anionic surfactant blend is from about 10:1 to about 1:1.

According to an embodiment of the present disclosure, the agrochemically acceptable excipients are selected from one or more of emulsifiers, colorants, thickeners/binders, antifreeze agents, antifoaming agents, antioxidants, solvents, preservatives, glidants, anticaking agents, pH-regulating agents, buffering agents, formulation aids, disintegrants, inert, wetting agents, or combinations thereof.

In another embodiment, emulsifiers which can be advantageously employed herein can be readily determined by those skilled in the art and include various non-ionic, anionic, cationic, and amphoteric emulsifiers, or a blend of two or more emulsifiers. Examples of non-ionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

In an embodiment, colorants may be selected from iron oxide, titanium oxide and Prussian Blue, and organic dyestuffs, such as alizarin dyestuffs, azo dyestuffs or metal phthalocyanine dyestuffs, and trace elements, such as salts of iron, manganese, boron, copper, cobalt, molybdenum and zinc.

In an embodiment, thickener/binders or gelling agent may be selected from but not limited to molasses, granulated sugar, alginates, karaya gum, jaguar gum, tragacanth gum, polysaccharide gum, mucilage, xanthan gum, or combinations thereof. In another embodiment, the binder may be selected from silicates such as magnesium aluminium silicate, polyvinyl acetates, polyvinyl acetate copolymers, polyvinyl alcohols, polyvinyl alcohol copolymers, celluloses, including ethylcelluloses and methylcelluloses, hydroxymethyl celluloses, hydroxypropylcelluloses, hydroxymethylpropyl-celluloses, polyvinylpyrolidones, dextrins, malto-dextrins, polysaccharides, fats, oils, proteins, gum arabics, shellacs, vinylidene chloride, vinylidene chloride copolymers, acrylic copolymers, starches, polyvinyl acrylates, zeins, gelatin, carboxymethylcellulose, chitosan, polyethylene oxide, acrylimide polymers and copolymers, polyhydroxyethyl acrylate, methylacrylimide monomers, alginate, ethylcellulose, polychloroprene and syrups or mixtures thereof; polymers and copolymers of vinyl acetate, methyl cellulose, vinylidene chloride, acrylic, cellulose, polyvinylpyrrolidone and polysaccharide; polymers and copolymers of vinylidene chloride and vinyl acetate-ethylene copolymers; combinations of polyvinyl alcohol and sucrose; plasticizers such as glycerol, propylene glycol, polyglycols.

In another embodiment, antifreeze agent(s) added to the composition may be alcohols selected from the group comprising of but not limited to ethylene glycol, 1,2-propylene glycol, 1,3-propylene glycol, 1,2-butanediol, 1,3-butanediol, 1,4-butanediol, 1,4-pentanediol, 3-methyl-1,5-pentanediol, 2,3-dimethyl-2,3-butanediol, trimethylol propane, mannitol, sorbitol, glycerol, pentaerythritol, 1,4-cyclohexanedimethanol, xylenol, bisphenols such as bisphenol A or the like. In addition, ether alcohols such as diethylene glycol, triethylene glycol, tetraethylene glycol, polyoxyethylene or polyoxypropylene glycols of molecular weight up to about 4000, diethylene glycol monomethyl ether, diethylene glycol monoethylether, triethylene glycol monomethylether, butoxyethanol, butylene glycol monobutyl ether, dipentaerythritol, tripentaerythritol, tetrapentaerythritol, diglycerol, triglycerol, tetraglycerol, pentaglycerol, hexaglycerol, heptaglycerol, octaglycerol.

According to an embodiment, antifoam agent may be selected from polydimethoxysiloxane, polydimethylsiloxane, alkyl poly acrylates, castor oil, fatty acids, fatty acids esters, fatty acids sulfate, fatty alcohol, fatty alcohol esters, fatty alcohol sulfate, foot olive oil, mono & di glyceride, paraffin oil, paraffin wax, poly propylene glycol, silicone, silicone oil, vegetable fats, vegetable fats sulfate, vegetable oil, vegetable oil sulfate, vegetable wax, vegetable wax sulfate, agents based on silicon or magnesium stearate, and blend of maltodextrin, and methylated silica.

The agrochemical composition may also comprise one or more antioxidants. Preferably, the agrochemical formulation comprises an antioxidant. Antioxidants are, for example, amino acids (e.g., glycine, histidine, tyrosine, tryptophan) and derivatives thereof, imidazole and imidazole derivatives (e.g., urocanic acid), peptides, such as, for example, D,L-carnosine, D-carnosine, L-carnosine and derivatives thereof (e.g., anserine), carotenoids, carotenes (e.g., α-carotene, β-carotene, lycopene) and derivatives thereof, lipoic acid and derivatives thereof (e.g., dihydrolipoic acid), aurothioglucose, propylthiouracil and further thio compounds (e.g., thioglycerol, thiosorbitol, thioglycolic acid, thioredoxin, glutathione, cysteine, cystine, cystamine and the glycosyl, N-acetyl, methyl, ethyl, propyl, amyl, butyl, lauryl, palmitoyl, oleyl, γ-linoleyl, cholesteryl and glyceryl esters thereof), and salts thereof, dilauryl thiodipropionate, distearyl thiodipropionate, thiodipropionic acid and derivatives thereof (esters, ethers, peptides, lipids, nucleotides, nucleosides and salts), and sulfoximine compounds (e.g., buthionine sulfoximines, homocysteine sulfoximine, buthionine sulfones, penta-, hexa-, heptathionine sulfoximine) in very low tolerated doses (e.g., pmol/kg to pmol/kg), also metal chelating agents (e.g., α-hydroxy fatty acids, EDTA, EGTA, phytic acid, lactoferrin), α-hydroxy acids (e.g., citric acid, lactic acid, malic acid), humic acids, bile acid, bile extracts, gallic esters (e.g., propyl, octyl and dodecyl gallate), flavonoids, catechins, bilirubin, biliverdin and derivatives thereof, unsaturated fatty acids and derivatives thereof (e.g., γ-linolenic acid, linoleic acid, arachidonic acid, oleic acid), folic acid and derivatives thereof, hydroquinone and derivatives thereof (e.g., arbutin), ubiquinone and ubiquinol, and derivatives thereof, vitamin C and derivatives thereof (e.g., ascorbyl palmitate, stearate, dipalmitate, acetate, Mg ascorbyl phosphates, sodium and magnesium ascorbate, disodium ascorbyl phosphate and sulfate, potassium ascorbyl tocopheryl phosphate, chitosan ascorbate), isoascorbic acid and derivatives thereof, tocopherols and derivatives thereof (e.g., tocopheryl acetate, linoleate, oleate and succinate, tocophereth-5, tocophereth-10, tocophereth-12, tocophereth-18, tocophereth-50, tocophersolan), vitamin A and derivatives (e.g., vitamin A palmitate), the coniferyl benzoate of benzoin resin, rutin, rutinic acid and derivatives thereof, disodium rutinyl disulfate, cinnamic acid and derivatives thereof (e.g., ferulic acid, ethyl ferulate, caffeic acid), kojic acid, chitosan glycolate and salicylate, butylhydroxytoluene, butylhydroxyanisol, nordihydroguaiacic acid, nordihydroguaiaretic acid, trihydroxybutyrophenone, uric acid and derivatives thereof, mannose and derivatives thereof, selenium and selenium derivatives (e.g., selenomethionine), stilbenes and stilbene derivatives (e.g., stilbene oxide, trans-stilbene oxide). According to the disclosure, suitable derivatives (salts, esters, sugars, nucleotides, nucleosides, peptides, and lipids) and mixtures of these specified active ingredients or plant extracts (e.g., teatree oil, rosemary extract and rosemarinic acid) which comprise these antioxidants can be used. In general, mixtures of the aforementioned antioxidants are possible.

According to an embodiment, examples of suitable solvents are water, oils of vegetable, or derivatives. In principle, solvent mixtures may also be used.

In another embodiment, suitable preservatives are for example benzothiazoles, 1,2-benzisothiazolin-3-one, sodium dichloro-s-triazinetrione, sodium benzoate, potassium sorbate, 1,2-phenyl-isothiazolin-3-one, inter chloroxylenol paraoxybenzoate butyl, benzoic acid, or combinations thereof.

In another embodiment, suitable inert are for example precipitated silica, titanium dioxide, kaolin, bentonite, soapstone, talc, attapulgite, ceramic, montmorillonite, pumice, sepiolite, diatomaceous earth, sand, clay, dolomite, calcite, magnesium oxides, magnesium carbonates, sucrose, corn starch, citric acid and its salts, or combinations thereof.

In an embodiment, the wetting agent may be selected from dialkyl naphthalene sulphonate formaldehyde condensate, dialkyl naphthalene sulphonate sodium salt and sodium naphthalene sulfonate - formaldehyde condensate.

In an embodiment, other formulation aids may be selected from fillers such as calcium sulphate dihydrate (gypsum).

According to an embodiment of the present disclosure, the fungicidal composition comprises from about 1% w/w to about 30% w/w of the agrochemically acceptable excipient of total weight of the fungicidal composition.

Accordingly in an embodiment, the present disclosure provides a granular fungicidal composition comprising:
(a) from about 10% w/w to about 70% w/w of the fungicide component;
(b) from about 1% w/w to about 40% w/w of the anionic surfactant blend; and
(c) from about 1% w/w to about 30% w/w of the agrochemically acceptable excipient.

Accordingly in an embodiment, the present disclosure provides a granular fungicidal composition comprising:
(a) from about 20% w/w to about 60% w/w of the fungicide component;
(b) from about 5% w/w to about 30% w/w of the anionic surfactant blend; and
(c) from about 1% w/w to about 30% w/w of the agrochemically acceptable excipient.

Accordingly in an embodiment, the present disclosure provides a granular fungicidal composition comprising:
(a) from about 30% w/w to about 55% w/w of the fungicide component;
(b) from about 5% w/w to about 20% w/w of the anionic surfactant blend; and
(c) from about 1% w/w to about 30% w/w of the agrochemically acceptable excipient.

Accordingly in an embodiment, the present disclosure provides a granular fungicidal composition comprising:
(a) of about 54.2% w/w of the fungicide component;
(b) of about 10.5% w/w of the anionic surfactant blend; and
(c) from about 1% w/w to about 30% w/w of the agrochemically acceptable excipient.

Accordingly in an embodiment, the present disclosure provides a fungicidal composition comprising:
(a) a fungicide component; and
(b) a surfactant blend;
wherein the fungicidal composition is in a form of a solid formulation.

In an embodiment, the fungicidal composition is selected from powder for dry soil application (DS), granule/soil applied (GR), Controlled (slow or fast) release granules (CR), jambo balls or bags (bags in water soluble pouch), water soluble granule (SG), water dispersible granule (WG or WDG), or soil applied granules (SAG).

According to an embodiment, the fungicidal composition is in a form of a water dispersible granule (WG or WDG).

Accordingly in an embodiment, the present disclosure provides a WDG fungicidal composition comprising:
(a) a fungicide component; and
(b) a surfactant blend.

Accordingly in an embodiment, the present disclosure provides a WDG fungicidal composition comprising:
(a) a fungicide component; and
(b) a surfactant blend;
wherein a weight ratio of the fungicide component to the surfactant blend is from about 10:1 to about 1:1.

Accordingly in an embodiment, the present disclosure provides a WDG fungicidal composition comprising:
(a) a fungicide component; and
(b) an anionic surfactant blend;
wherein a weight ratio of the fungicide component to the anionic surfactant blend is from about 10:1 to about 1:1.

Accordingly in an embodiment, the present disclosure provides a WDG fungicidal composition comprising:
(a) a fungicide component comprising a copper compound and a benzamide fungicide; and
(b) an anionic surfactant blend;
wherein a weight ratio of the fungicide component to the anionic surfactant blend is from about 10:1 to about 1:1.

Accordingly in an embodiment, the present disclosure provides a WDG fungicidal composition comprising:
(a) a fungicide component comprising tribasic copper sulphate (TBCS) and zoxamide; and
(b) an anionic surfactant blend comprising polynaphthalene sulfonate and sodium lignosulfonate;
wherein a weight ratio of the fungicide component to the anionic surfactant blend is from about 10:1 to about 1:1.

Accordingly in an embodiment, the present disclosure provides a WDG fungicidal composition comprising:
(a) a fungicide component comprising tribasic copper sulphate (TBCS) and zoxamide; and
(b) an anionic surfactant blend comprising sodium polynaphthalene sulfonate, sodium lignosulfonate, sodium isopropyl naphthalene sulfonate;
wherein a weight ratio of the fungicide component to the anionic surfactant blend is from about 10:1 to about 1:1.

According to an embodiment of the present disclosure, the granular fungicidal composition while not being limited to any particular sizes, the granules of the present disclosure typically have an average particle size in the range from about 0.1 µm to about 10 µm, preferably from about 0.25 mm to about 5 mm, and more preferably from about 0.5 mm to about 3 mm, although sizes outside of this range may also be included.

In an embodiment, the D₅₀ value is not less than about 2 micron and D₉₀ value is not less than about 6 micron.

Accordingly in an embodiment, the present disclosure provides a fungicidal composition comprising:
(a) a fungicide component; and
(b) a surfactant blend;
wherein the fungicidal composition is in a form of a tank mix or a pre-formulated (pre-mix)/ready-mix formulation.

According to an embodiment, the present disclosure provides a fungicidal composition in a form of a pre-formulated (pre-mix)/ready-mix formulation.

Accordingly in an embodiment, the present disclosure provides a pre-mix fungicidal composition comprising:
(a) a fungicide component; and
(b) a surfactant blend.

In a preferred embodiment, the present disclosure provides a pre-mix fungicidal composition comprising:
(a) a fungicide component comprising tribasic copper sulphate (TBCS) and zoxamide;
(b) an anionic surfactant blend comprising polynaphthalene sulfonate and sodium lignosulfonate;
wherein a weight ratio of the fungicide component to the anionic surfactant blend is from about 10:1 to about 1:1.

In a preferred embodiment, the present disclosure provides a pre-mix fungicidal composition comprising:
(a) a fungicide component comprising tribasic copper sulphate (TBCS) and zoxamide;
(b) an anionic surfactant blend comprising sodium polynaphthalene sulfonate, sodium lignosulfonate, sodium isopropyl naphthalene sulfonate;
wherein a weight ratio of the fungicide component to the anionic surfactant blend is from about 10:1 to about 1:1.

Accordingly in an embodiment, the fungicidal composition disclosed herein may be applied together as a pre-mix formulation.

In yet another embodiment, the fungicidal compositions may be applied to the soil prior to emergence of the seedling (pre-emergence), to prevent establishment of the fungi. Alternatively, the application of the fungicidal composition may be post the emergence of the seedling (post-emergence) to prevent growth of the fungal phytopathogens.

In yet another embodiment, the fungicidal composition may be applied as a foliar spray at different timings during crop development, with as many early applications (pre-emergence) or late (post-emergence) applications as required.

According to an embodiment, the present disclosure provides use of a fungicidal composition comprising a copper compound and a fungicide, for controlling the growth of fungal phytopathogens.

In a preferred embodiment, the present disclosure provides use of a fungicidal composition comprising an inorganic copper compound and a benzamide fungicide, for controlling the growth of fungal phytopathogens.

In a preferred embodiment, the present disclosure provides use of the fungicidal composition for controlling the growth of fungal phytopathogens, wherein the fungicidal composition comprises:
(a) a fungicide component; and
(b) a surfactant blend.

In a preferred embodiment, the present disclosure provides use of the fungicidal composition for controlling the growth of fungal phytopathogens, wherein the fungicidal composition comprises:
(a) a fungicide component comprising a copper compound and a benzamide fungicide; and
(b) an anionic surfactant blend;
wherein a weight ratio of the fungicide component to the anionic surfactant blend is from about 10:1 to about 1:1.

In a preferred embodiment, the present disclosure provides use of the fungicidal composition for controlling the growth of fungal phytopathogens, wherein the fungicidal composition comprises:
(a) a fungicide component comprising tribasic copper sulphate (TBCS) and zoxamide; and
(b) an anionic surfactant blend comprising polynaphthalene sulfonate and sodium lignosulfonate;
wherein a weight ratio of the fungicide component to the anionic surfactant blend is from about 10:1 to about 1:1.

In a preferred embodiment, the present disclosure provides use of the fungicidal composition for controlling the growth of fungal phytopathogens, wherein the fungicidal composition comprises:
(a) a fungicide component comprising tribasic copper sulphate (TBCS) and zoxamide; and
(b) an anionic surfactant blend comprising sodium polynaphthalene sulfonate, sodium lignosulfonate, sodium isopropyl naphthalene sulfonate;
wherein a weight ratio of the fungicide component to the anionic surfactant blend is from about 10:1 to about 1:1.

In a preferred embodiment, the present disclosure provides use of the fungicidal composition for controlling the growth of fungal phytopathogens, wherein the fungicidal composition comprises:
(a) a fungicide component comprising tribasic copper sulphate (TBCS) and zoxamide;
(b) an anionic surfactant blend comprising polynaphthalene sulfonate and sodium lignosulfonate; and
(c) at least one agrochemically acceptable excipient;
wherein a weight ratio of the fungicide component to the anionic surfactant blend is from about 10:1 to about 1:1.

In a preferred embodiment, the present disclosure provides use of the fungicidal composition for controlling the growth of fungal phytopathogens, wherein the fungicidal composition comprises:
(a) a fungicide component comprising tribasic copper sulphate (TBCS) and zoxamide;
(b) an anionic surfactant blend comprising sodium polynaphthalene sulfonate, sodium lignosulfonate, sodium isopropyl naphthalene sulfonate; and
(c) at least one agrochemically acceptable excipient;
wherein a weight ratio of the fungicide component to the anionic surfactant blend is from about 10:1 to about 1:1.

According to another embodiment, the fungicidal composition may be applied before or after infection of the plants by the fungal phytopathogens, to the plant, or a locus or a plant propagation material thereof.

In another embodiment, the fungicidal composition may be used for foliar application, application to a ground, or to a plant, or a locus or a plant propagation material, or combinations thereof.

According to an embodiment of the present disclosure, a process for preparing a water dispersible granular (WDG) fungicidal composition comprising:
(a) a fungicide component comprising a copper compound and a benzamide fungicide; and
(b) an anionic surfactant blend;
wherein the process comprises:
(i) mixing the copper compound and the benzamide fungicide and the anionic surfactant blend to obtain a pre-mix,
(ii) coating the pre-mix on carrier granules to obtain coated granules, and
(iii) drying the coated granules to obtain the granular fungicidal composition.

According to an embodiment of the present disclosure, a process for preparing a water dispersible granular (WDG) fungicidal composition comprising:
(a) a fungicide component comprising tribasic copper sulphate (TBCS) and zoxamide; and
(b) an anionic surfactant blend;
wherein the process comprises:
(i) mixing tribasic copper sulphate (TBCS) and zoxamide and the anionic surfactant blend to obtain a pre-mix,
(ii) coating the pre-mix on carrier granules to obtain coated granules, and
(iii) drying the coated granules to obtain the granular fungicidal composition.

According to an embodiment of the present disclosure, a process for preparing a water dispersible granular (WDG) fungicidal composition comprising:
(a) a fungicide component comprising tribasic copper sulphate (TBCS) and zoxamide; and
(b) an anionic surfactant blend comprising polynaphthalene sulfonate and sodium lignosulfonate;
wherein the process comprises:
(i) mixing tribasic copper sulphate (TBCS) and zoxamide and the anionic surfactant blend comprising polynaphthalene sulfonate and sodium lignosulfonate to obtain a pre-mix,
(ii) coating the pre-mix on carrier granules to obtain coated granules, and
(iii) drying the coated granules to obtain the granular fungicidal composition.

According to an embodiment of the present disclosure, a process for preparing a water dispersible granular (WDG) fungicidal composition comprising:
(a) a fungicide component comprising tribasic copper sulphate (TBCS) and zoxamide; and
(b) an anionic surfactant blend comprising sodium polynaphthalene sulfonate, sodium lignosulfonate, sodium isopropyl naphthalene sulfonate;
wherein the process comprises:
(i) mixing tribasic copper sulphate (TBCS) and zoxamide and the anionic surfactant blend comprising sodium polynaphthalene sulfonate, sodium lignosulfonate, sodium isopropyl naphthalene sulfonate to obtain a pre-mix,
(ii) coating the pre-mix on carrier granules to obtain coated granules, and
(iii) drying the coated granules to obtain the granular fungicidal composition.

According to an embodiment, the target crop may include, cereals such as wheat, barley, rye, oats, corn, rice, sorghum, triticale and related crops; beets such as sugar beet and fodder beet; leguminous plants such as beans, lentils, peas, soybean, chickpeas; dry bean, dry pea, rye, triticale, oat, wheat, barley, oil plants such as rape, mustard, sunflowers; cucurbits such as marrows, cucumbers, melons; fibre plants such as cotton, flax, hemp, jute; vegetables such spinach, lettuce, asparagus, cabbages, carrots, onions, tomatoes, potatoes, paprika as well as ornamentals such as flowers, shrubs, broad-leaved trees and evergreens, such as conifers. According to an embodiment, the fungicidal composition of the present disclosure can be used to control fungal diseases, for example pea diseases caused by one or more species of: *Alternaria alternata, Aphanomyces euteiches f. sp. pisi, Ascochyta pinodella, Ascochyta pinodes, Ascochyta pisi, Botryotinia fuckeliana, Botrytis cinerea, Cercospora pisa-sativae, Chalara elegans, Cladosporium cladosporioides f. sp. pisicoia, Cladosporium pisicoia, Colletotrichum gloeosporioides, Colletotrichum pisi, Erysiphe pisi, Fusarium oxysporum, Fusarium oxysporum. sp. pisi, Fusarium solani, Fusicladium pisicoia, Glomerella cingulata, Mycosphaerella pinodes, Oidium sp., Peronospora viciae, Phoma pinodella, Pythium spp., Rhizoctonia solani, Sclerotinia sclerotiorum, Septoria pisi, Thanatephonis cucumeris, Thielaviopsis hasicola and Uromyces fabae, Soybean diseases: Cercospora kikuchii, Elsinoe glycines, Diaporthe phaseolorum var. sojae, Septoria glycines, Cercospora sojina, Phakopsora pachyrhizi, Phytophthora sojae Rhizoctonia solani.*

In a preferred embodiment, the fungicidal composition may be used to control a broad spectrum of plant diseases, such as:
Disease in rice: Blast (*Magnaporthe* grisea), Helminthosporium leaf spot (*Cochliobolus miyabeanus*)*,* sheath blight *(Rhizoctonia solani),* and bakanae disease (*Gibberella fujikuroi*)*.*
Diseases in wheat: powdery mildew (Erysiphe graminis) , Fusariuin head blight (*Fusarium graminearum, F. avenacerum, F. culmorum, Microdochium nivale*) , rust *(Puccinia striiformis, P. graminis, P. recondita)* , pink snow mold *(Micronectriella nivale),* Typhula snow blight (*Typhula* sp.) , loose smut (*Ustilago tritici*) , bunt (*Tilletia caries*) , eyespot (Pseudocercosporella herpotrichoides) , leaf blotch (*Mycosphaerella graminicola*) , glume blotch (Stagonospora nodorum) , septoria, and yellow spot *(Pyrenophora tritici-repentis).*
Diseases in barley: powdery mildew (*Erysiphe graminis*)*,* Fusarium head blight (*Fusarium graminearum, F. avenacerum, F. culmorum, Microdochium nivale*)*,* rust (*Puccinia striiformis, P. graminis, P. hordei*)*,* loose smut (*Ustilago nuda),* scald (*Rhynchosporium secalis*), net blotch (*Pyrenophora teres),* spot blotch (*Cochliobolus sativus*)*,* leaf stripe *(Pyrenophora graminea*)*,* and Rhizoctonia damping-off *(Rhizoctonia solani).*
Diseases in corn: smut (*Ustilago maydis*)*,* brown spot (*Cochliobolus heterostrophus),* copper spot (*Gloeocercospora sorghi*)*,* southern rust (*Puccinia polysora*), gray leaf spot *(Cercospora zeae-maydis*)*,* white spot (*Phaeosphaeria mydis* and/or *Pantoea ananatis)* and Rhizoctonia damping-off *(Rhizoctonia solani).*
Diseases in citrus: melanose (*Diaporthe citri*)*,* scab (*Elsinoe fawcetti*)*,* penicillium rot (*Penicillium digitatum, P. italicum*)*,* and brown rot (*Phytophthora parasitica, Phytophthora citrophthora*).
Diseases in apple: blossom blight (*Monilinia mali),* canker (Valsa ceratosperma), powdery mildew (Podosphaera leucotricha), Alternaria leaf spot (Alternaria alternata apple pathotype), scab (*Venturia inaequalis*)*,* powdery mildew, bitter rot (Colletotrichum acutatum), crown rot (*Phytophtora cactorum*)*,* blotch (*Diplocarpon mali*)*,* and ring rot (*Botryosphaeria berengeriana)*.
Diseases in pear: scab (*Venturia nashicola, V. pirina*), powdery mildew, black spot *(Alternaria alternata* Japanese pear pathotype), rust (*Gymnosporangium haraeanum),* and phytophthora fruit rot (*Phytophtora cactorum).*
Diseases in peach: brown rot (*Monilinia fructicola),* powdery mildew, scab (*Cladosporium carpophilum),* and phomopsis rot (*Phomopsis sp.).*
Diseases in grape: anthracnose *(Elsinoe ampelina),* ripe rot (*Glomerella cingulata),* powdery mildew (*Uncinula necator*)*,* rust (*Phakopsora ampelopsidis),* black rot *(Guignardia bidwellii),* botrytis, and downy mildew (*Plasmopara viticola).*
Diseases in Japanese persimmon: anthracnose (*Gloeosporium kaki),* and leaf spot *(Cercospora kaki, Mycosphaerella nawae).*
Diseases in gourd: anthracnose (*Colletotrichum lagenarium*), powdery mildew *(Sphaerotheca fuliginea*), gummy stem blight (*Mycosphaerella melonis),* Fusarium wilt (*Fusarium oxysporum)*, downy mildew (*Pseudoperonospora cubensis*)*,* Phytophthora rot *(Phytophthora sp.), and* damping-off *(Pythium sp.).*
Diseases in tomato: early blight (*Alternaria solani),* leaf mold (*Cladosporium fulvum),* and late blight (*Phytophthora infestans).*
Diseases in eggplant: brown spot (*Phomopsis vexans*)*,* and powdery mildew (*Erysiphe cichoracearum)* Diseases of cruciferous vegetables: Alternaria leaf spot (Alternaria japonica), white spot (*Cercosporella brassicae*)*,* clubroot (*Plasmodiophora brassicae*)*,* and downy mildew (*Peronospora parasitica).*
Diseases in onion: rust (*Puccinia allii*), and downy mildew (*Peronospora destructor*)*.*
Diseases in soybean: purple seed stain (*Cercospora kikuchii),* sphaceloma scad (*Elsinoe glycines*)*,* pod and stem blight (*Diaporthe phaseolorum var. sojae),* septoria brown spot (*Septoria glycines*)*,* frogeye leaf spot *(Cercospora sojina*), rust (*Phakopsora pachyrhizi*)*,* Yellow rust, brown stem rot (*Phytophthora sojae),* and Rhizoctonia damping-off *(Rhizoctonia solani).*
Diseases in kidney bean: anthracnose *(Colletotrichum lindemthianum).* Diseases of peanut: leaf spot (*Cercospora personata*), brown leaf spot (*Cercospora arachidicola*) and southern blight (Sclerotium rolfsii).
Diseases in garden pea: powdery mildew (*Erysiphe pisi*)*,* and root rot (*Fusarium solani* f. sp. pisi).
Diseases in potato: early blight *(Alternaria solani),* late blight (*Phytophthora infestans*), pink rot (*Phytophthora erythroseptica),* and powdery scab *(Spongospora subterranean f. sp. subterranea).*
Diseases in strawberry: powdery mildew (*Sphaerotheca humuli*)*,* and anthracnose *(Glomerella cingulata).*
Diseases in tea: net blister blight *(Exobasidium reticulatum),* white scab (*Elsinoe leucospila*)*,* gray blight (*Pestalotiopsis* sp.), and anthracnose *(Colletotrichum theae- sinensis).*
Diseases in tobacco: brown spot (*Alternaria longipes),* powdery mildew *(Erysiphe cichoracearum),* anthracnose (*Colletotrichum tabacum*)*,* downy mildew (*Peronospora tabacina),* and black shank (*Phytophthora nicotianae).*
Diseases in rapeseed: sclerotinia rot (*Sclerotinia sclerotiorum*)*,* and Rhizoctonia damping-off *(Rhizoctonia solani).* Diseases of cotton: Rhizoctonia damping-off *(Rhizoctonia solani).*
Diseases in sugar beet: Cercospora leaf spot *(Cercospora beticola),* leaf blight (*Thanatephorus cucumeris),* Root rot (*Thanatephorus cucumeris*)*,* and Aphanomyces root rot *(Aphanomyces cochlioides).*
Diseases in rose: black spot *(Diplocarpon rosae*)*,* powdery mildew (*Sphaerotheca pannosa),* and downy mildew (*Peronospora sparsa),* Diseases of chrysanthemum and asteraceous plants: downy mildew (*Bremia lactucae*), leaf blight (*Septoria chrysanthemi-indici),* and white rust (*Puccinia horiana*).
Diseases in various groups: diseases caused by Pythium spp. (*Pythium aphanidermatum, Pythium debarianum*, *Pythium graminicola, Pythium irregulare*, *Pythium ultimum),* gray mold. (*Botrytis cinerea*)*,* and Sclerotinia rot (*Sclerotinia sclerotiorum).*
Disease in Japanese radish: Alternaria leaf spot (*Alternaria brassicicola*).
Diseases in turfgrass: dollar spot (*Sclerotinia homeocarpa*), and brown patch and large patch *(Rhizoctonia solani).*
Disease in banana: Black sigatoka (*Mycosphaerella fijiensis),* Yellow sigatoka *(Mycosphaerella musicola)*.
Disease in sunflower: downy mildew (*Plasmopara halstedii*).

In another embodiment, the seed diseases or diseases in the early stages of the growth of various plants caused by *Aspergillus spp., Penicillium spp*., *Fusarium spp., Gibberella* spp., *Tricoderma spp., Thielaviopsis spp*., *Rhizopus spp*., *Mucor spp., Corticium spp., Phoma spp*., *Rhizoctonia spp.* and *Diplodia spp.* Additionally, viral diseases of various plants mediated by *Polymxa* spp. or *Olpidium* spp. and so on.

According to an embodiment, the present disclosure provides a method for controlling the growth of fungal phytopathogens, the method comprising applying to a plant, or a locus, or a plant propagation material thereof, an effective amount of a fungicidal composition comprising an inorganic copper compound and a benzamide fungicide.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component; and
(b) a surfactant blend.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component comprising a copper compound and a benzamide fungicide; and
(b) an anionic surfactant blend;
wherein a weight ratio of the fungicide component to the anionic surfactant blend is from about 10:1 to about 1:1.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component comprising tribasic copper sulphate (TBCS) and zoxamide; and
(b) an anionic surfactant blend comprising polynaphthalene sulfonate and sodium lignosulfonate;
wherein a weight ratio of the fungicide component to the anionic surfactant blend is from about 10:1 to about 1:1.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component comprising tribasic copper sulphate (TBCS) and zoxamide; and
(b) an anionic surfactant blend comprising sodium polynaphthalene sulfonate, sodium lignosulfonate, sodium isopropyl naphthalene sulfonate;
wherein a weight ratio of the fungicide component to the anionic surfactant blend is from about 10:1 to about 1:1.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component comprising tribasic copper sulphate (TBCS) and zoxamide;
(b) an anionic surfactant blend comprising polynaphthalene sulfonate and sodium lignosulfonate; and
(c) at least one agrochemically acceptable excipient;
wherein a weight ratio of the fungicide component to the anionic surfactant blend is from about 10:1 to about 1:1.

In a preferred embodiment, the present disclosure provides a method for controlling the growth of fungal phytopathogens, the method comprising applying to a plant, or a locus, or a plant propagation material thereof, an effective amount of a fungicidal composition comprising:
(a) a fungicide component comprising tribasic copper sulphate (TBCS) and zoxamide;
(b) an anionic surfactant blend comprising sodium polynaphthalene sulfonate, sodium lignosulfonate, sodium isopropyl naphthalene sulfonate; and
(c) at least one agrochemically acceptable excipient;
wherein a weight ratio of the fungicide component to the anionic surfactant blend is from about 10:1 to about 1:1.

According to an embodiment, the inorganic copper compound is present in a concentration range from about 200 g/L to about 500 g/L of the fungicidal composition.

In a preferred embodiment, tribasic copper sulphate (TBCS) is present in a concentration range of about 465 g/L of the fungicidal composition.

According to an embodiment, the benzamide fungicide is present in a concentration range from about 20 g/L to about 200 g/L of the fungicidal composition.

In a preferred embodiment, zoxamide is present in a concentration range of about 77 g/L of the fungicidal composition.

According to an embodiment, polynaphthalene sulfonate is present in a concentration range from about 1 g/L to about 200 g/L of the fungicidal composition.

In a preferred embodiment, polynaphthalene sulfonate is present in a concentration range of about 50 g/L of the fungicidal composition.

According to an embodiment, sodium lignosulfonate is present in a concentration range from about 1 g/L to about 200 g/L of the fungicidal composition.

In a preferred embodiment, sodium lignosulfonate is present in a concentration range of about 50 g/L of the fungicidal composition.

According to an embodiment, sodium isopropyl naphthalene sulfonate is present in a concentration range from about 0.1 g/L to about 20 g/L of the fungicidal composition.

In a preferred embodiment, sodium isopropyl naphthalene sulfonate is present in a concentration range of about 5 g/L of the fungicidal composition.

According to an embodiment, the present disclosure provides a method for controlling growth of fungal phytopathogens, wherein the fungicidal composition is applied in a range from about 10 g a.i./ha to about 5000 g a.i./ha.

In a preferred embodiment, the present disclosure provides a method for controlling growth of fungal phytopathogens, wherein the fungicidal composition is applied in a range from about 10 g a.i./ha to about 3000 g a.i./ha.

In a preferred embodiment, the present disclosure provides a method for controlling growth of fungal phytopathogens, wherein the fungicidal composition is applied in a range from about 10 g a.i./ha to about 1500 g a.i./ha.

In a preferred embodiment, the present disclosure provides a method for controlling growth of fungal phytopathogens, wherein the fungicidal composition is applied in a range from about 10 g a.i./ha to about 500 g a.i./ha.

In a preferred embodiment, the present disclosure provides a method for controlling growth of fungal phytopathogens, wherein the fungicidal composition is applied in a range from about 50 g a.i./ha to about 450 g a.i./ha.

In a preferred embodiment, the present disclosure provides a method for controlling growth of fungal phytopathogens, wherein the fungicidal composition is applied in a range from about 100 g a.i./ha to about 400 g a.i./ha.

According to an embodiment, the various components of the granular fungicidal composition may be used individually or already partially or completely mixed with one another to prepare the water dispersible granular fungicidal composition. It is also possible for the components to be separately packaged and used as a component in a kit of parts.

In one embodiment, the kits may include one or more of the components that are used to prepare a granular fungicidal composition. For examples, the kits may include active ingredients and/or surfactant blend. One or more of the components may already be combined together or pre-formulated.

According to an embodiment of the present disclosure, a kit comprising a granular fungicidal composition is provided. The kit comprises a plurality of components, including at least one of the ingredients of the fungicidal composition of the present disclosure.

In one embodiment of the present disclosure, the kit includes at least one, or all of components needed to prepare the fungicidal composition. For example, the kit may include a copper compound and a benzamide fungicide and a surfactant blend.

In one embodiment of the present disclosure, the kit includes at least one, or all of components needed to prepare the fungicidal composition. For example, the kit may include a tribasic copper sulphate (TBCS), zoxamide and an anionic surfactant blend.

One or more of the components may already be combined together or pre-formulated. In those embodiments where more than two components are provided in a kit, the components may already be combined and as such are packaged in a single container such as a vial, bottle, can, pouch, bag and/or canister. In other embodiments, two or more components of a kit may be packaged separate from one another, i.e., they are not pre-formulated. As such, a kit may include one or more separate containers such as vials, cans, bottles, pouches, bags and/or canisters, each container containing a separate component of the fungicidal composition.

In both forms, an individual component of the kit may be applied separate from or together with the other components of the kit or as a component of a combination or a composition.

The disclosure also provides a kit comprising fungicidal composition for the controlling the growth of fungal phytopathogens and instructions for use. The instructions for use typically comprise instructions for the application of the fungicidal composition to a plant, or a locus, or a plant propagation material thereof.

According to an embodiment, the kit of parts comprises:
(a) a fungicide component; and
(b) an anionic surfactant blend;
   and optionally further comprises:
(c) instructions for use.

In a preferred embodiment, the kit of parts comprises:
(a) a fungicide component;
(b) an anionic surfactant blend; and
(c) at least one agrochemically acceptable excipient;
   and optionally further comprises:
(d) instructions for use.

According to an embodiment, the kit of parts comprises:
(a) a fungicide component comprising tribasic copper sulphate (TBCS) and zoxamide;
(b) an anionic surfactant blend comprising polynaphthalene sulfonate and sodium lignosulfonate; and
(c) at least one agrochemically acceptable excipient;
   and optionally further comprises:
(d) instructions for use.

According to an embodiment, the kit of parts comprises:
(a) a fungicide component comprising tribasic copper sulphate (TBCS) and zoxamide;
(b) an anionic surfactant blend comprising sodium polynaphthalene sulfonate, sodium lignosulfonate, sodium isopropyl naphthalene sulfonate; and
(c) at least one agrochemically acceptable excipient;
   and optionally further comprises:
(d) instructions for use.

According to an embodiment of the present disclosure, the fungicidal composition of the present disclosure is stable, over time and at various temperatures.

In an embodiment of the present disclosure, the fungicide composition preferably retains its physical integrity during handling and spreading, and, upon broadcasting, typically releases the active ingredients when contacting wet soil, irrigation water, or rainfall hits the broadcasting granules.

In view of the above, it will be seen that the several advantages of the disclosure are achieved, and other advantageous results attained. Although the present disclosure has been disclosed in full, it will be understood that numerous additional modifications and variations could be made thereto without departing from the scope of the disclosure.

It will be understood that the specification and examples are illustrative but not limitative of the present disclosure and that other embodiments within the spirit and scope of the disclosure will suggest themselves to those skilled in the art. Other embodiments can be practiced that are also within the scope of the present disclosure. The embodiments which are within the spirit and scope of the disclosure may be combined together for better understanding of the disclosure. The following examples illustrate the disclosure, but by no means intend to limit the scope of the claims.

### EXAMPLES:

### Example 1: WDG Composition comprising TBCS and zoxamide

| **Ingredients** | **Concentration (% w/w)** |
|---|---|
| Tribasic copper sulphate (TBCS) | 46.5 |
| Zoxamide | 7.7 |
| Polynaphthalene sulfonate | 5.0 |
| Sodium lignosulfonate | 5.0 |
| Sodium isopropyl naphthalene sulfonate | 0.5 |
| Silicone | 0.1 |
| Water | Q.S. |
| Total | 100 |

### Process:

Tribasic copper sulphate (TBCS) was mixed with zoxamide, polynaphthalene sulphonate, sodium lignosulfonate, sodium isopropyl naphthalene sulfonate and silicone to obtain a pre-mix. The pre-mix was coated on carrier granules to obtain coated granules, and the coated granules were dried to obtain the WDG fungicidal composition.

### Example 2: Stability studies

The WDG fungicidal composition as disclosed in Example 1 was evaluated for its stability. The composition was determined at T₀, and under accelerated heat stability (AHS) conditions for 14 days at 54°C designated as T₁. The stability was also evaluated after 3 months, at 40°C, designated as T₂.

**Table 1: Stability study of composition of Example 1**

| **Parameters** | **T₀** | **T₁ (AHS) 14 Days/54°C** | **T₂ 3 Months/40°C** |
|---|---|---|---|
| **Retention of actives** | | | |
| Copper content (%) | 30.7 | 30.8 | 30.6 |
| Zoxamide (%) | 5.01 | 5.00 | 4.91 |

| **Particle size analysis (Malvern 3000) (µm)** | | | |
|---|---|---|---|
| D₅₀ | 1.83 | 1.84 | 1.83 |
| D₁₀ | 0.59 | 0.56 | 0.58 |
| D₉₀ | 6.78 | 6.79 | 6.81 |
| Suspensibility (%) | 89 | 88 | 87 |

### Retention of actives:

The concentrations of the actives of tribasic copper sulphate (TBCS) and zoxamide in the present WDG fungicidal composition were maintained with minimal loss for a period extending up to three months with elevated temperature conditions. Even at AHS conditions, the concentration of the actives was maintained with negligible loss.

### Suspensibility:

The suspensibility of the WDG fungicidal composition was also maintained at AHS conditions (T₁) and at conditions of 40°C for 3 months (T₂).

### Example 3: Stability studies

The WDG fungicidal composition as disclosed in Example 1 was evaluated for its stability. The composition was determined at T₀, under accelerated heat stability (AHS) conditions at 54°C for 14 days (T₁) and for 28 days (T₂). The stability was also evaluated after 3 months, at 40°C, (T₃). Furthermore, the stability was evaluated after 18 months at ambient temperature, designated as (T₄).

**Table 2: Stability study of composition of Example 1**

| **Parameters** | **T₀** | **T₁ 14 Days/ 54°C** | **T₂ 28 Days/ 54°C** | **T₃ 3 Months/ 40°C** | **T₄ 18 Months/ Ambient Temperature** |
|---|---|---|---|---|---|
| **Retention of actives** | | | | | |
| Copper content (%) | 25.2 | 25.5 | 25.1 | 25.1 | 25.4 |
| Zoxamide (%) | 7.61 | 7.51 | 7.40 | 7.46 | 7.73 |

| **Particle size analysis (Malvern 3000) (µm)** | | | | | |
|---|---|---|---|---|---|
| D₅₀ | 1.8 | 1.9 | 1.9 | 1.9 | 1.9 |
| Suspensibility (%) | 92 | 93 | 92 | 92 | 92 |

### Retention of actives:

The concentrations of the actives of tribasic copper sulphate (TBCS) and zoxamide in the present WDG fungicidal composition were maintained with minimal loss for a period extending up to three months with elevated temperature conditions and up to 18 months at ambient temperature conditions. Even at AHS conditions, the concentration of the actives was maintained with negligible loss.

### Suspensibility:

The suspensibility of the WDG fungicidal composition was also maintained at AHS conditions T₁ and T₂, and at conditions of 40°C for 3 months (T₂) and at ambient temperature for 18 months (T₄).

## Claims

1. A granular fungicidal composition comprising:
(a) a fungicide component comprising an inorganic copper compound and a benzamide fungicide; and
(b) an anionic surfactant blend;
wherein a weight ratio of the fungicide component to the anionic surfactant blend is from about 10:1 to about 1:1.

2. The composition as claimed in claim 1, wherein the inorganic copper compound is tribasic copper sulphate (TBCS).

3. The composition as claimed in claim 1, wherein the benzamide fungicide is selected from the group comprising benzohydroxamic acid, flumetover, fluopicolide, fluopimomide, tioxymid, trichlamide, zarilamid, zoxamide, and combinations thereof.

4. The composition as claimed in claim 3, wherein the benzamide fungicide is zoxamide.

5. The composition as claimed in claim 1, wherein the anionic surfactant blend comprises at least two salts of sulfonic acid surfactants.

6. The composition as claimed in claim 5, wherein the sulfonic acid surfactants are selected from the group comprising sodium alkylnaphthalene sulfonate, polynaphthalene sulfonate, sodium polynaphthalene sulfonate, sodium isopropyl naphthalene sulfonate, calcium lignosulfonate, sodium lignosulfonate, ammonium lignosulfonate, and combinations thereof.

7. The composition as claimed in claim 5, wherein the anionic surfactant blend comprises polynaphthalene sulfonate and sodium lignosulfonate in a weight ratio of about 1:1.

8. The composition as claimed in claim 5, wherein the anionic surfactant blend comprises sodium polynaphthalene sulfonate, sodium lignosulfonate and sodium isopropyl naphthalene sulfonate in a weight ratio of about 1:1:0.1.

9. The composition as claimed in claim 1, wherein the composition comprises from about 20% w/w to about 60% w/w of the fungicide component and from about 5% w/w to about 30% w/w of the anionic surfactant blend of total weight of the fungicidal composition.

10. The composition as claimed in claim 1, wherein the composition comprises from about 20% w/w to about 60% w/w of the inorganic copper compound and from about 5% w/w to about 10% w/w of the benzamide fungicide of total weight of the fungicidal composition.

11. The composition as claimed in claim 1, wherein the inorganic copper compound and the benzamide fungicide are present in a weight ratio from about 10:1 to about 1:1.

12. A water-dispersible granule (WDG) fungicidal composition comprising:
(a) a fungicide component comprising tribasic copper sulphate (TBCS) and zoxamide; and
(b) an anionic surfactant blend comprising polynaphthalene sulfonate and sodium lignosulfonate;
wherein a weight ratio of the fungicide component to the anionic surfactant blend is from about 10:1 to about 1:1.

13. A water-dispersible granule (WDG) fungicidal composition comprising:
(a) a fungicide component comprising tribasic copper sulphate (TBCS) and zoxamide; and
(b) an anionic surfactant blend comprising sodium polynaphthalene sulfonate, sodium lignosulfonate and sodium isopropyl naphthalene sulfonate;
wherein a weight ratio of the fungicide component to the anionic surfactant blend is from about 10:1 to about 1:1.

14. Use of a granular fungicidal composition comprising a fungicide component and an anionic surfactant blend, for controlling growth of fungal phytopathogens;
wherein a weight ratio of the fungicide component to the anionic surfactant blend is from about 10:1 to about 1:1.

15. A process for preparing a water dispersible granular (WDG) fungicidal composition comprising:
(a) a fungicide component comprising an inorganic copper compound and a benzamide fungicide; and
(b) an anionic surfactant blend;
wherein the process comprises:
(i) mixing the inorganic copper compound and the benzamide fungicide and the anionic surfactant blend to obtain a pre-mix,
(ii) coating the pre-mix on carrier granules to obtain coated granules, and
(iii) drying the coated granules to obtain the fungicidal composition.

16. A method for controlling growth of fungal phytopathogens, the method comprising:
applying to a plant, or a locus, or a plant propagation material thereof, an effective amount of a granular fungicidal composition comprising a fungicide component and an anionic surfactant blend;
wherein a weight ratio of the fungicide component to the anionic surfactant blend is from about 10:1 to about 1:1.
